# EUROPÄISCHE PATENTSCHRIFT

(11) **EP 0 796 348 B1**
(45) Veröffentlichungstag und Bekanntmachung des Hinweises auf die Patenterteilung: **23.05.2001**
(21) Anmeldenummer: 96932375.7
(22) Anmeldetag: 08.10.1996
(51) Int. Cl.: C21B 13/00

(54) **VERFAHREN ZUR DIREKTREDUKTION VON TEILCHENFÖRMIGEM EISENHÄLTIGEM MATERIAL SOWIE ANLAGE ZUR DURCHFÜHRUNG DES VERFAHRENS**
METHOD OF DIRECTLY REDUCING A PARTICULATE IRON-CONTAINING MATERIAL, AND PLANT FOR CARRYING OUT THE METHOD
PROCEDE DE REDUCTION DIRECTE DE MATERIAU PARTICULAIRE RENFERMANT DU FER ET INSTALLATION POUR LA MISE EN OEUVRE DUDIT PROCEDE

(30) Priorität: 10.10.1995 AT 168295; 21.08.1996 AT 150796
(43) Veröffentlichungstag der Anmeldung: 24.09.1997
(73) Patentinhaber: VOEST-ALPINE INDUSTRIEANLAGENBAU GMBH, 4020 Linz (AT); Brifer International Ltd., Bridgetown, Barbados (BB)
(72) Erfinder: CIP, Gerhard, 4040 Linz (AT); ROSSMANN, Gottfried, 4020 Linz (AT); MILIONIS, Konstantin, 8413 St. Georgen 122 (AT); WHIPP, Roy Hubert, Jr., Windermere, FL 34786 (US)
(74) Vertreter: Kopecky, Helmut, Dipl.-Ing.
(86) Internationale Anmeldenummer: AT9600190
(87) Internationale Veröffentlichungsnummer: WO9713879

(56) Entgegenhaltungen:
- EP-A- 0 571 358
- DE-C- 4 037 977
- GB-A- 1 599 163
- US-A- 5 082 251
- PATENT ABSTRACTS OF JAPAN vol. 010, no. 280 (C-374), 24.September 1986 & JP,A,61 099611 (NIPPON STEEL CORP;OTHERS: 01), 17.Mai 1986,
- DATABASE EPODOC EPO XP002021637 & CN,A,1 109 510 (HENAN PROV METALLURG I) 4.Oktober 1995

## Beschreibung

Die Erfindung betrifft ein Verfahren zur Direktreduktion von teilchenförmigem eisenhältigem Material in einem mehrstufigen Wirbelschichtverfahren, wobei reformiertes Gas, zumindest zum Teil vom CO₂ befreit, als H₂- und CO-hältiges Reduktionsgas einer Wirbelschicht-Reduktionszone zugeführt und von dieser als Topgas abgezogen wird und wobei das Topgas zumindest teilweise gemeinsam mit reformiertem Gas für die Direktreduktion eingesetzt wird, sowie eine Anlage zur Durchführung des Verfahrens.

Ein Verfahren dieser Art ist aus der EP-A - 0 571 358 sowie der US-A - 5,082, 251 bekannt. Hierbei wird eisenreiches Feinerz in einem System von in Serie angeordneten Wirbelschichtreaktoren mit Hilfe von aus Erdgas durch Reformieren gebildetem Reduktionsgas unter erhöhtem Druck reduziert. Das so erzeugte Eisenpulver wird anschließend einer Heiß- oder Kaltbrikettierung unterworfen.

Bei diesen bekannten Verfahren wird zur Vermeidung eines zu hohen CO₂-Gehalts im Reduktionsgas das CO₂ aus dem Reduktionsgas, bevor es in den ersten Wirbelschichtreaktor eingeleitet wird, durch Waschen mit Hilfe einer herkömmlichen CO₂-Wäsche basierend auf dem Prinzip der physikalischen oder chemischen Absorption entfernt. Durch die CO₂-Wäsche wird eine hohe Selektivität erreicht, d.h. daß vornehmlich CO₂ und H₂S aus dem zu reinigenden Gasstrom entfernt werden. Andere Moleküle, wie z.B. H₂, CH₄, N₂ etc., werden von dem Absorptionsmittel praktisch nicht gebunden und verbleiben im gereinigten Gasstrom. Erdgas wird zur Beheizung des Reformers und weiters zur Beheizung eines Reduktionsgas-Erhitzers herangezogen, wobei gegebenenfalls Topgas zugemischt wird.

Die Erfindung stellt sich die Aufgabe, diese bekannten Verfahren weiterzuentwickeln, u.zw. dahingehend, bei gleichbleibender Reduktionskraft das Reduktionsgasvolumen zu verringern, so daß Einsparungen bei Anlagenteilen, die mit dem Reduktionsgas beaufschlagt werden, möglich sind. So sollen sich insbesondere Einsparungen an Investitionskosten für die Reduktionsgas-Verdichter und eine Reduktion des Stromverbrauches für die Reduktionsgas-Verdichtung sowie Heizkosteneinsparungen erzielen lassen, jedoch die Produktionskapazität zumindest gleich bleiben oder erhöht werden. Weiters soll das aus der CO₂-Eliminierungsanlage stammende Tailgas nutzbringend für den Prozeß eingesetzt werden können.

Diese Aufgabe wird bei einem Verfahren der eingangs beschriebenen Art dadurch gelöst, daß das reformierte Gas vor der CO₂-Eliminierung durch Mischen mit Topgas stark abgekühlt wird und aus 50 bis 100 % des reformierten Gases und bis 100 % des Topgases zusätzlich zum CO₂ zumindest teilweise CH₄ und N₂ durch eine Druckwechseladsorption, entfernt werden, daß das Reduktionsgas erhitzt wird und daß das aus dem reformierten Gas bzw. dem Topgas durch Adsorption entfernte Tailgas als Heizgas eingesetzt wird.

Aus der DE-C - 40 37 977 ist es an sich bekannt, bei der Direktreduktion von stückigem Eisenerz für die Direktreduktion wahlweise einen CO₂-Wäscher oder eine Druckwechseladsorptionsanlage einzusetzen. Hierbei wird das stückige Eisenerz in einem Reduktionsschachtofen im Festbettverfahren reduziert und nach dem Ausbringen aus dem Reduktionsschachtofen in einen Einschmelzvergaser eingebracht, in dem aus Kohle und Sauerstoff das in den Reduktionsschachtofen eingeleitete Reduktionsgas erzeugt wird, und das reduzierte Eisenerz eingeschmolzen wird. Hierbei handelt es sich um ein Verfahren, das bei niedrigem Druck durchgeführt wird, wogegen beim erfindungsgemäßen Wirbelschichtverfahren das Reduktionsgas mit wesentlich höherem Druck geführt ist. Hierdurch ergibt sich als besonderer Vorteil für das erfindungsgemäße Verfahren, daß - im Gegensatz zum bekannten Verfahren - keine zusätzlichen Verdichter für die Gasführung zur Adsorption erforderlich sind. Für das Wirbelschichtverfahren ergibt sich daher eine hohe Einsparung an elektrischer Energie.

Ahnlich beschreibt die GB-A-1 599 163 den Einsatz einer Druckwechselabsorptionsanlage zur Befreiung von gemeinsam mit rezykliertem Topgas einem Direkreduktionsreaktor als Reduktionsgaz zugefuhrtem Reformgas von allen Bestandteilen außer Wasserstoff.

Durch das Adsorptionsverfahren ergibt sich im Vergleich zur CO₂-Wäsche die Möglichkeit, das spezifische Reduktionsgasvolumen bei gleichbleibender Reduktionskraft zu verringern, u.zw. dadurch, daß bei der Adsorption im Vergleich zur CO₂-Wäsche wesentlich mehr CH₄ und inertes N₂ ausgeschleust werden. Hierdurch kommt es zu Einsparungen bei den hierdurch betroffenen Anlagenteilen, wie Rohre, Verdichter, Ventile etc.

Da das aus dem reformierten Gas bzw. dem Topgas durch Druckwechseladsorption entfernte Tailgas einen sehr hohen Heizwert aufweist, wird es zweckmäßig zum Erhitzen des Reduktionsgases und/oder als Heizgas für den Reformprozeß zur Herstellung des reformierten Gases eingesetzt.

Zweckmäßig wird das reformierte Gas vor der CO₂-Eliminierung auf eine Temperatur zwischen 20 und 100°C, insbesondere zwischen 30 und 50°C, abgekühlt, wodurch es gelingt, den Wirkungsgrad der Druckwechseladsorption stark zu verbessern.

Die Verwirklichung des erfindungsgemäßen Verfahrens ist insbesondere dann von Vorteil, wenn die Direktreduktion des teilchenförmigen eisenhältigen Materials in mehreren in Serie hintereinander geschalteten Wirbelschichtreduktionszonen durchgeführt wird, wobei das feinteilchenförmige eisenhältige Material von Wirbelschichtzone zu Wirbelschichtzone durch Schwerkraft von oben nach unten und das Reduktionsgas von Wirbelschichtzone zu Wirbelschichtzone in entgegengesetzter Richtung geführt ist, wobei das bei der Direktreduktion verbrauchte Reduktionsgas als Topgas aus der obersten Wirbelschichtreduktionszone abgezogen, mit reformiertem Gas vermischt und als Reduktionsgas eingesetzt wird.

Zweckmäßig erfolgt das Erhitzen des Reduktionsgases zweistufig, u.zw. in einer ersten Stufe durch Wärmetausch und in einer zweiten Stufe durch Teilverbrennung mit Hilfe von in das Reduktionsgas eingeleitetem Sauerstoff. Dies ist bei Anwendung der Druckwechseladsorptionsanlage von besonderem Vorteil, da die Druckwechseladsorptionsanlage ein Reduktionsgas mit 0 Vol.% Wasser ergibt. Es gelingt somit, den Wassergehalt im Reduktionsgas auch nach einer Erwärmung durch Nachverbrennung bzw. Teilverbrennung sehr niedrig zu halten, obwohl sich bei der Nachverbrennung bzw. Teilverbrennung der H₂O-Gehalt zu Lasten des H₂-Gehaltes um 1 bis 5 Vol.% erhöht. Ein möglicher Verlust von CO aufgrund der Nach- bzw. Teilverbrennung kann durch geänderte Reformerfahrweise, z.B. kleineres Dampf: Kohlenstoff-Verhältnis oder z.B. größeren Bypass-Strom zur Adsorptionsanlage, ausgeglichen werden.

Eine Anlage zur Durchführung des erfindungsgemäßen Verfahrens mit einer Mehrzahl von Wirbelschichtreaktoren zur Aufnahme des eisenoxidhältigen Materials, einer Reduktionsgas-Zuleitung zum in Materialflußrichtung letztangeordneten Wirbelschichtreaktor und einer das sich bei der Reduktion bildende Topgas vom in Materialflußrichtung erstangeordneten Wirbelschichtreaktor abführenden Topgas-Ableitung, mit einem Reformer, einer vom Reformer ausgehenden Reformgas-Leitung, die mit der Topgas-Leitung zusammenmündet, wobei das aus reformiertem Gas und Topgas gebildete Reduktionsgas über die Reduktionsgas-Zuleitung in den letztangeordneten Wirbelschichtreaktor gelangt, und mit einer CO₂-Eliminierungsanlage, ist dadurch gekennzeichnet, daß die CO₂-Eliminierungsanlage als Druckwechseladsorptionsanlage ausgebildet und von einer Mischung aus Topgas und durch die Mischung stark abgekuhlten reformierten Gas beaufschlagt ist, und daß eine von der Adsorptionsanlage das von CO₂ befreite Gas zu einer Heizeinrichtung führende Leitung und eine von der Adsorptionsanlage abgeschiedenes Tailgas ableitende Tailgas-Ableitung zu einer Heizeinrichtung führt.

Zur einfachen Einstellung der gewünschten chemischen Zusammensetzung des Reduktionsgases ist die Adsorptionsanlage von einer Topgas-Zweigleitung sowie gegebenenfalls von einer reformiertes Gas leitenden Zweigleitung, die von der Reformgas-Leitung ausgeht, überbrückt.

Zweckmäßig ist die Tailgas-Ableitung mit der Heizeinrichtung des Reformers leitungsmäßig verbunden oder mit einem Gaserhitzer für das Reduktionsgas leitungsmäßig verbunden.

Zur Erzielung eines optimalen Wirkungsgrades der Druckwechseladsorptionsanlage ist vorteilhaft in der Gas-Zuleitung zur Adsorptionsanlage ein Gaskühler vorgesehen.

Eine optimale Ausgestaltung einer erfindungsgemäßen Anlage ist dadurch gekennzeichnet, daß eine Mehrzahl von Wirbelschichtreaktoren hintereinander in Serie geschaltet ist, wobei das eisenoxidhältige Material von Wirbelschichtreaktor zu Wirbelschichtreaktor über Förderleitungen in einer Richtung und das Reduktionsgas von Wirbelschichtreaktor zu Wirbelschichtreaktor über Verbindungsleitungen in die entgegengesetzte Richtung geführt ist, und wobei innerhalb jedes Wirbelschichtreaktors Zyklone zur Abscheidung von mit dem Reduktionsgas mitgerissenen Feinteilchen vorgesehen sind.

Eine effiziente Erhitzung des Reduktionsgases ist dadurch gekennzeichnet, daß als Heizeinrichtung für das Reduktionsgas ein Wärmetauscher und in Serie dazu eine Teilverbrennungseinrichtung für das Reduktionsgas mit einer Sauerstoffzuführung vorgesehen sind.

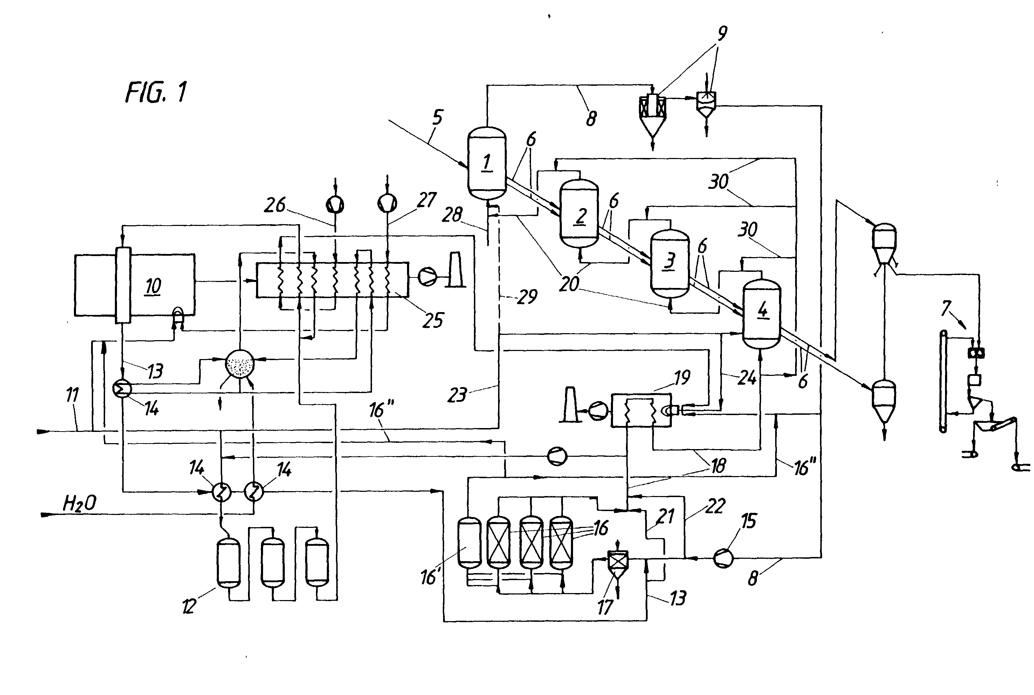

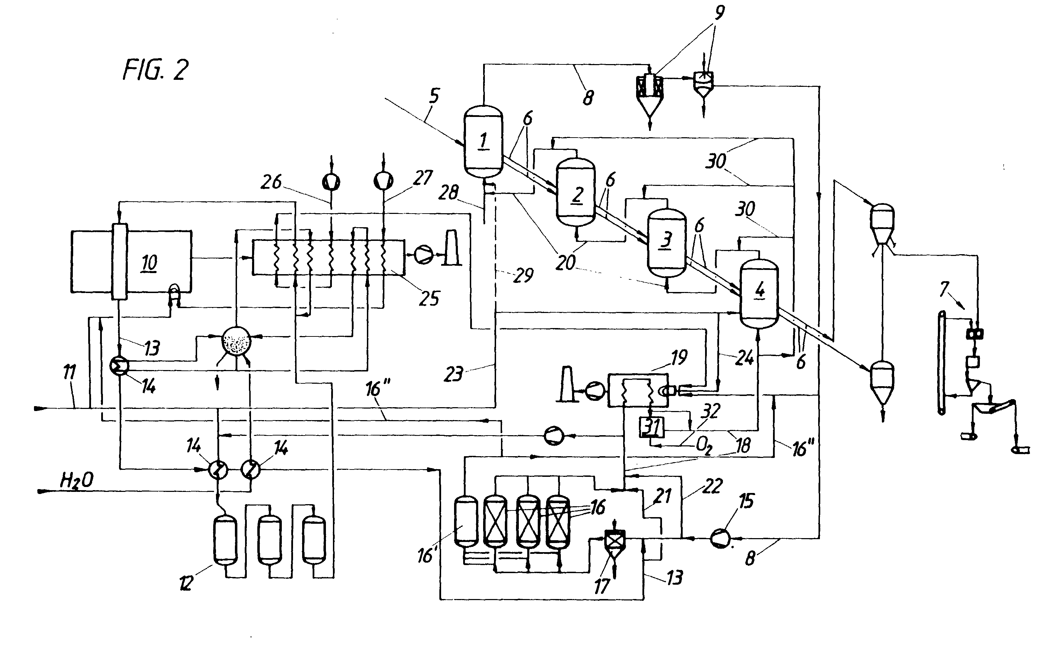

Die Erfindung ist nachfolgend anhand zweier in der Zeichnung dargestellter Ausführungsbeispiele näher erläutert, wobei die Fig. 1 und 2 jeweils ein Verfahrensschema nach einer bevorzugten Ausführungsform zeigen.

Die erfindungsgemäße Anlage weist gemäß Fig. 1 vier in Serie hintereinander geschaltete Wirbelschichtreaktoren 1 bis 4 auf, wobei eisenoxidhältiges Material, wie Feinerz, über eine Erzzuleitung 5 dem ersten Wirbelschichtreaktor 1, in dem die Aufheizung auf Reduktionstemperatur (bzw. eine Vorreduktion) stattfindet, zugeleitet und anschließend von Wirbelschichtreaktor zu Wirbelschichtreaktor über Förderleitungen 6 geleitet wird. Das fertig reduzierte Material (Eisenschwamm) wird in einer Brikettieranlage 7 heißbrikettiert. Erforderlichenfalls wird das reduzierte Eisen während der Brikettierung vor einer Reoxidation durch ein nicht dargestelltes Inertgas-System geschützt.

Vor Einleitung des Feinerzes in den ersten Wirbelschichtreaktor 1 wird es einer Erzvorbereitung, wie einer Trocknung und einem Sieben, unterzogen, die nicht näher dargestellt ist.

Reduktionsgas wird im Gegenstrom zum Erzdurchfluß von Wirbelschichtreaktor 4 zu Wirbelschichtreaktor 3 bis 1 geführt und als Topgas über eine Topgas-Ableitung 8 aus dem in Gasströmungsrichtung letzten Wirbelschichtreaktor 1 abgeleitet und in einem Naßwäscher 9 gekühlt und gewaschen. Innerhalb der Wirbelschichtreaktoren 1 bis 4 sind in der Zeichnung nicht dargestellte Zyklone zur Abscheidung von mit dem Reduktionsgas mitgerissenen Feinteilchen vorgesehen.

Die Herstellung des Reduktionsgases erfolgt durch Reformieren von über die Leitung 11 zugeführtem und in einer Entschwefelungsanlage 12 entschwefeltem Erdgas in einem Reformer 10. Das aus Erdgas und Dampf gebildete, den Reformer 10 verlassende Gas besteht im wesentlichen aus H₂, CO, CH₄, H₂O und CO₂. Dieses reformierte Erdgas wird über die Reformgasleitung 13 mehreren Wärmetauschern 14 zugeleitet, in denen es abgekühlt wird, wodurch Wasser aus dem Gas auskondensiert wird.

Die Reformgasleitung 13 mündet in die Topgas-Ableitung 8, nachdem das Topgas mittels eines Kompressors 15 verdichtet wurde. Das sich so bildende Mischgas wird durch eine Druckwechseladsorptionsanlage 16 hindurchgeschickt und von CO₂ sowie zumindest teilweise von H₂S, CH₄, N₂ befreit. Es steht nunmehr als Reduktionsgas zur Verfügung.

In der Adsorptionsanlage 16 mit Gasspeicher 16' wird das zu reinigende Gas durch mit Molekularsieben gefüllte Behälter geleitet; je nach Wahl des Adsorbens werden durch Größe und Polarität bestimmte Moleküle bevorzugt entfernt. Die Selektivität ist dabei, im Falle der Reinigung von aus Erdgas durch Reformieren gebildetem Synthesegas oder rezykliertem Topgas, geringer als bei CO₂-Wäschen, d.h. es fällt ein größerer Anteil von abgetrenntem Gas an. Dieses, in weiterer Folge "Tailgas" genannte Abgas, hat im Gegensatz zum bei einer CO₂-Wäsche anfallenden Abgas jedoch einen relativ hohen Heizwert und kann somit in den für den Direktreduktionsprozeß benötigten Öfen, wie z.B. zur Erhitzung des Reduktionsgases oder Heizung des Dampfreformers, verfeuert werden und damit die normalerweise zur Verbrennung erforderliche Fremdenergie verringern.

Der Speicher 16' zur Aufnahme des Tailgases ist über Leitungen 16" mit dem Dampfreformer 10 zur Beheizung desselben und einem Gaserhitzer 19 zur Aufheizung des Reduktionsgases verbunden.

Der Druckwechseladsorptionsanlage 16 vorgeordnet ist ein Gaskühler 17, in dem das der Druckwechseladsorptionsanlage 16 zugeführte Gas auf etwa 40°C oder darunter abgekühlt wird, wodurch ein guter Wirkungsgrad der Druckwechseladsorptionsanlage 16 sichergestellt wird. Die Abkühlung kann durch direkte Wasserkühlung oder indirekte Kühlung erfolgen.

Dieses Reduktionsgas wird über eine Reduktionsgas-Zuleitung 18 in einem der Druckwechseladsorptionsanlage 16 nachgeordneten Gaserhitzer 19 auf eine Reduktionsgastemperatur von etwa 800°C erhitzt und dem in Gasdurchflußrichtung ersten Wirbelschichtreaktor 4 zugeführt, wo es mit den Feinerzen zur Erzeugung von direktreduziertem Eisen reagiert. Die Wirbelschichtreaktoren 4 bis 1 sind in Serie geschaltet; das Reduktionsgas gelangt über die Verbindungsleitungen 20 von Wirbelschichtreaktor 4 zu Wirbelschichtreaktor 3, 2 und 1.

Erfindungsgemäß wird der Druckwechseladsorptionsanlage 16 entweder nur reformiertes Gas zugeführt oder ein Gasgemisch, das aus 50 bis 100 % des reformierten Gases und 0 bis 100 % des Topgases besteht.

Von der Reformgasleitung 13 zweigt eine Zweigleitung 21 ab, u.zw. bevor die Reformgasleitung 13 mit der Topgas-Ableitung 8 zusammenmündet. Diese Zweigleitung 21 vereint sich mit der von der Druckwechseladsorptionsanlage 16 zum Gaserhitzter 19 führenden Reduktionsgas-Zuleitung 18. Weiters geht von der Topgas-Ableitung 8 eine weitere Zweigleitung 22 aus, die sich ebenfalls mit der von der Druckwechseladsorptionsanlage 16 zum Gaserhitzer 19 führenden Reduktionsgas-Zuleitung 18 vereint. Mit Hilfe dieser beiden Zweigleitungen 21, 22, die selbstverständlich so wie alle übrigen Gasleitungen mit Ventilen ausgestattet sind, gelingt es, entweder der Druckwechseladsorptionsanlage 100 % reformiertes Gas ausschließlich zuzuführen oder der Druckwechseladsorptionsanlage 16 ein Gasgemisch aus 50 bis 100 % des reformierten Gases und 0 bis 100 % des Topgases zuzuführen.

Um eine bestimmte Reduktionsgasanalyse einzustellen, sind neben der Wahl eines speziellen Adsorbens folgende Möglichkeiten gegeben:
- Definiertes Vorbeiführen von Teilströmen im Bereich 0 bis 100 % der zur Druckwechseladsorptionsanlage 16 geführten Gase an der Druckwechseladsorptionsanlage 16 - vorzugsweise 0 bis 30 % des Synthesegases oder Reformergases etc., bzw. vorzugsweise 0 bis 100 % des rezyklierten Topgases.
- Aufgrund der Tatsache, daß die Druckwechseladsorptionsanlage 16 im Vergleich zur CO₂-Wäsche mehr CH₄ und inertes N₂ ausschleust, besteht die Möglichkeit, das spezifische Reduktionsgasvolumen bei gleichbleibendere Reduktionskraft zu verringern. Dadurch ist es möglich, Einsparungen bei betroffenen Anlagenteilen vorzunehmen. Ist ein höherer CH₄-Gehalt erwünscht, als mit den oben beschriebenen Schaltungsvarianten erzielt werden kann, so kann Erdgas oder reines CH₄ in den zu den Reduktionsreaktoren 1 bis 4 geführten Reduktionsgasstrom über die Leitung 23 eingespeist werden.

Ein Teil des Topgases wird aus dem Gas-Kreislauf 8 ausgeschleust, um eine Anreicherung von Inertgasen, wie N₂, zu vermeiden. Das ausgeschleuste Topgas wird über eine Zweigleitung dem Gaserhitzer 19 zur Erwärmung des Reduktionsgases zugeführt und dort verbrannt. Eventuell fehlende Energie wird durch Erdgas, welches über die Zuleitung 24 zugeführt wird, ergänzt.

Die fühlbare Wärme des aus dem Reformer 10 austretenden reformierten Erdgases sowie der Reformerrauchgase wird in einem Rekuperator 25 genutzt, um das Erdgas nach Durchlauf durch die Entschwefelungsanlage 12 vorzuwärmen, den für die Reformierung benötigten Dampf zu erzeugen sowie die dem Gaserhitzer 19 über die Leitung 26 zugeführte Verbrennungsluft sowie gegebenenfalls auch das Reduktionsgas vorzuwärmen. Die dem Reformer über die Leitung 27 zugeführte Verbrennungsluft wird ebenfalls vorgewärmt.

Um eine Temperaturabsenkung im in Erzdurchlaufrichtung ersten Wirbelschichtreaktor 1 zu vermeiden, kann es vorteilhaft sein, einen Teil des aus dem zweiten Wirbelschichtreaktor 2 austretenden Reduktionsgases im ersten Wirbelschichtreaktor zu verbrennen, zu welchem Zweck in den ersten Wirbelschichtreaktor eine Sauerstoff-Zuführungsleitung 28 und gegebenenfalls eine Erdgas-Zuführungsleitung 29 münden.

Um in sämtlichen Wirbelschichtreaktoren 1 bis 4 die Reaktionstemperatur auf gleicher Höhe konstant zu halten und hierdurch eine weitere Senkung des Energiebedarfes zu erzielen, wird heißes und frisches Reduktionsgas den Wirbelschichtreaktoren 1 bis 3, die dem in Reduktionsgas-Strömungsrichtung ersten Wirbelschichtreaktor 4 nachgeordnet sind, über Zweigleitungen 30 direkt zugeführt, u.zw. in einer Menge von etwa 10 % je Wirbelschichtreaktor 1, 2 und 3. Die Wirbelschichtreaktoren 1 bis 4 sind somit hinsichtlich der Reduktionsgasführung nicht nur in Serie, sondern, was die Zuführung eines geringen Teiles des Reduktionsgases betrifft, auch parallel geschaltet, wogegen die Wirbelschichtreaktoren 1 bis 4, was die Ab- bzw. Weiterleitung des Reduktionsgases betrifft, beim dargestellten Ausführungsbeispiel ausschließlich in Serie geschaltet sind.

Gemäß der in Fig. 2 dargestellten Anlage erfolgt das Erhitzen des Reduktionsgases zweistufig, u.zw. in einer ersten Stufe durch Wärmetausch in dem Gaserhitzer 19 und in einer zweiten Stufe durch Teilverbrennung in einer Teilverbrennungseinrichtung 31 mit Hilfe von in das Reduktionsgas über eine Leitung 32 eingeleitetem Sauerstoff.

Vorteilhaft wird das zu erwärmende Gas zunächst in dem Gaserhitzer 19, der als indirekter Wärmetauscher arbeitet, auf eine Temperatur im Bereich von 200 bis 600°C gebracht. Die Wärmezufuhr kann durch Verfeuerung von beliebigen Brennstoffen erfolgen, vorzugsweise wird Erdgas und aus dem Reduktionsprozeß abgezweigtes Topgas eingesetzt.

Die weitere Erwärmung des Reduktionsgases auf Temperaturen vorzugsweise im Bereich von 700 bis 900°C kann durch folgende Varianten erfolgen:
a) durch Abtrennung eines Teilstromes des Reduktionsgases und stöchiometrischer Verbrennung desselben mit reinem Sauerstoff (gegebenenfalls kann auch eine Mischung mit Luft genommen werden). Dieser Teilstrom wird mit dem restlichen, kühleren Reduktionsgas gemischt, so daß sich die gewünschte Endtemperatur des Gesamtreduktionsgasstromes einstellt.
b) durch Einbringen des gesamten Reduktionsgases in eine Brennkammer und Teilverbrennung (d.h. unterstöchiometrisch). Durch Rückmischung der verbrannten Gase mit den unverbrannten stellt sich die gewünschte Endtemperatur ein.

Durch diese Art der Aufwärmung läßt sich somit das Problem des Metal Dustings eliminieren sowie eine ökonomischere Prozeßführung aufgrund des geringeren Druckverlustes in einem Teilverbrennungsofen gegenüber einem typischen indirekt befeuerten Ofen erzielen.

Durch die Teilverbrennung ändert sich auch die Analyse des Reduktionsgases, typischerweise erhöht sich der H₂O-Anteil zu Lasten des H₂-Gehaltes um 1 bis 5 Vol.%. Dies gilt auch für den CO₂-Anteil zu Lasten des CO-Gehaltes.

Zur Einstellung einer bestimmten Reduktionsgasanalyse nach dem Aufheizen ist deshalb eine geeignete Verfahrensführung vor dem Aufheizen erforderlich. Dies ist mittels einer variablen Fahrweise der CO₂-Eliminierung, des Reformers etc. möglich: So kann die Erzeugung von CO₂ bei der Teilverbrennung problemlos ausgeglichen werden, z.B. durch Einstellung eines geringeren CO₂-Gehaltes am Austritt der Druckwechseladsorptionsanlage 16. Der Verlust von CO aufgrund der Teilverbrennung kann durch geänderte Reformerfahrweise (z.B. kleineres Dampf: Kohlenstoff-Verhältnis) oder z.B. größeren Bypass-Strom zur CO- Konvertierung kompensiert werden. Ähnliches gilt für die Einstellung des H₂- und H₂O-Gehaltes.

Da die Druckwechseladsorptionsanlage ein Reduktionsgas mit 0 Vol.% Wasser erzeugt, kann der Wassergehalt im Reduktionsgas zu den Reduktionsreaktoren - d.h. nach der Erwärmung im Teilverbrennungsofen - sehr niedrig gehalten werden (im Bereich von 1 bis 2 Vol.%).

Die Erfindung beschränkt sich nicht auf die in der Zeichnung dargestellten Ausführungsbeispiele, sondern kann in verschiedener Hinsicht modifiziert werden. Beispielsweise ist es möglich, die Anzahl der Wirbelschichtreaktoren je nach den Erfordernissen zu wählen. Anstelle der Druckwechseladsorption kann auch das Temperaturwechseladsorptionsverfahren herangezogen werden. Erstere macht sich den hohen Systemdruck bei gegenständlichem Direktreduktionsprozeß zunutze, d.h. Adsorption und Regeneration des Adsorbens erfolgen durch unterschiedliche Druckbeaufschlagung der Behälter, wobei zum Aufdrücken keine Fremdenergie erforderlich ist, sondern der Systemdruck direkt ausgenützt wird. Bei der zweiten Variante, der Temperaturwechseladsorption (TSA - Temperature Swing Adsorption), wird der Adsorptions- und Regenerationsprozeß durch ein geeignetes Temperaturprofil bei praktisch konstantem Druck gesteuert. Die Adsorptionsfähigkeit des aktiven Mediums hängt neben dem Druck auch von der Temperatur ab. Dieses Verfahren gilt bei dem vorliegenden Einsatzgebiet als zweite Wahl, da die Druckwechseladsorption für die Einsatzanalysen von reformiertem Gas und Topgas sowie für den vorliegenden Systemdruck prädestiniert ist.

### Beispiel A

In einer der Fig. 1 entsprechenden Anlage mit einer stündlichen Leistung von 75 t/h heißbrikettiertem Eisen werden 104 t/h Feinerz umgesetzt.

Im Dampfreformer 10 werden 108.000 Nm³/h reformiertes Gas durch Reaktion von 18.100 Nm³/h Erdgas mit 60.300 Nm³/h Dampf erzeugt. Die zur Unterfeuerung erforderliche Wärmemenge von 94 MW wird durch Erdgas (61 MW), vorgewärmte Luft (23 MW) und Tailgas (10 MW) gedeckt.

70 % des reformierten Gases werden mit 55 % des rezyklierten Topgases gemischt und nach Kühlung auf 40°C der Druckwechseladsorptionsanlage 16 mit einem Druck von 14,25 bar zugeführt. Das gereinigte Gas mit einer Temperatur von 45°C und einem Druck von 13,45 bar wird mit den vorbeigeführten Gasströmen gemischt - in Summe 179.900 Nm³/h - und dem Reduktionsgaserhitzer 19 zugeführt.

Das abgetrennte Tailgas - 22.900 Nm³/h - steht mit einem Druck von 0,3 bar, einer Temperatur von 35°C und einem Energiegehalt von 60 MW zur Verfügung.

Zur Aufheizung des Reduktionsgases auf 835°C sind 65 MW, zusammengesetzt aus 50 MW Tailgas, 14,7 MW vorgewärmter Luft und 0,3 MW Topgas, erforderlich.

Das heißbrikettierte Eisen weist einen Metallisierungsgrad von 92 % auf.

### Die Analysen der Gase lauten:

| | reformiertes Gas | Gas zur Druckwechseladsorptionsanlage | Tailgas | Reduktionsgas |
|---|---|---|---|---|
| CO [Vol.%] | 7,7 | 9,2 | 9,8 | 8,8 |
| CO₂ [Vol.%] | 6,0 | 8,1 | 38,9 | 4,1 |
| H₂ [Vol.%] | 47,0 | 63,1 | 20,1 | 67,0 |
| H₂O [Vol.%] | 36,1 | 1,9 | 9,8 | 1,6 |
| N₂ [Vol.%] | 0,9 | 5,3 | 4,8 | 5,7 |
| CH₄ [Vol.%] | 2,3 | 12,4 | 16,6 | 12,8 |

Gegenüber dem Stand der Technik ergibt sich erfindungsgemäß ein Reduktionsgas mit deutlich geringerem N₂- bzw. CH₄-Gehalt (z.B. gemäß der EP-A - 0 571 358: 14,94 Vol.% N₂, 16,29 Vol.% CH₄) und somit verbesserter Reduktionskraft.

Das eingesetzte Feinerz weist 96,91 Gew.% Fe₂O₃ und 2,29 Gew.% Gangart auf, der Rest sind Glühverluste.

### Beispiel B

In einer der Fig. 1 entsprechenden Anlage mit einer stündlichen Leistung von 75 t/h heißbrikettiertem Eisen werden 104 t/h Feinerz umgesetzt.

Im Dampfreformer 10 werden 100.100 Nm³/h reformiertes Gas durch Reaktion von 17.200 Nm³/h Erdgas mit 55.700 Nm³/h Dampf erzeugt. Die zur Unterfeuerung erforderliche Wärmemenge von 86 MW wird durch Erdgas (25 MW), vorgewärmte Luft (21 MW) und Tailgas (40 MW) gedeckt.

90 % des reformierten Gases werden mit 60 % des rezyklierten Topgases gemischt und nach Kühlung auf 40°C der Druckwechseladsorptionsanlage 16 mit einem Druck von 14,25 bar zugeführt. Das gereinigte Gas mit einer Temperatur von 45°C und einem Druck von 13,45 bar wird mit den vorbeigeführten Gasströmen gemischt - in Summe 184.000 Nm³/h - und dem Reduktionsgaserhitzer 19 zugeführt.

Das abgetrennte Tailgas - 26.900 Nm³/h - steht mit einem Druck von 0,3 bar, einer Temperatur von 35°C und einem Energiegehalt von 87 MW zur Verfügung.

Zur Aufheizung des Reduktionsgases auf 835°C sind 68 MW, zusammengesetzt aus 47 MW Tailgas, 15 MW vorgewärmter Luft und 6 MW Topgas, erforderlich.

Das heißbrikettierte Eisen weist einen Metallisierungsgrad von 92 % auf.

### Die Analysen der Gase lauten:

| | reformiertes Gas | Gas zur Druckwechseladsorptionsanlage | Erdgas | Tailgas | Reduktionsgas |
|---|---|---|---|---|---|
| CO[Vol.%] | 7,7 | 8,2 | 0,0 | 8,8 | 7,4 |
| CO₂[Vol.%] | 6,0 | 6,9 | 0,2 | 33,6 | 2,6 |
| H₂[Vol.%] | 47,0 | 60,8 | 0,0 | 19,7 | 64,1 |
| H₂O [Vol.%] | 36,1 | 1,8 | 0,0 | 9,9 | 1,6 |
| N₂[Vol.%] | 0,9 | 4,9 | 5,3 | 4,5 | 5,5 |
| CH₄[Vol.%] | 2,3 | 17,4 | 94,3 | 23,5 | 18,8 |
| C₂H₆[Vol.%] | 0,0 | 0,0 | 0,2 | 0,0 | 0,0 |

Der wesentliche Unterschied zwischen Beispiel A und B ist der unterschiedliche CH₄-Gehalt im Reduktionsgas. CH₄ gilt zwar als Inertanteil für die eigentliche Reduktion, kann aber dennoch die Produktqualität beeinflussen. Bei Beispiel A liegt der CH₄-Anteil des Reduktionsgases bei ca. 12,8 Vol.%, bei Beispiel B hingegen bei 18,8 Vol.%, was zu einem höheren Kohlenstoffgehalt im späteren brikettierten Produkt führt. Dieser höhere Kohlenstoffgehalt kann (muß aber nicht) als Vorteil bei bestimmten Einsatzvarianten des Produktes gelten. Z.B. kann der höhere Kohlenstoffgehalt bei der weiteren Stahlerzeugung in einem Elektroofen zu Energieeinsparungen beim Aufschmelzen führen.

Das eingesetzte Feinerz weist 96,91 Gew.% Fe₂O₃ und 2,29 Gew.% Gangart auf, der Rest sind Glühverluste.

### Beispiel C

In einer Anlage zur Erzeugung von 75 t/h heißbrikettiertem Eisen wird folgende Konfiguration der Reduktionsgaserzeugung gewählt:
- Produktion von 130.000 Nm³/h reformiertem Gas mit selber Analyse wie in Beispiel A
- 100 % des reformierten Gases werden nach Abkühlung der Druckwechseladsorptionsanlage 16 zugeführt
- das so gereinigte Gas wird mit dem rezyklierten Topgas gemischt
- die Summe der Gasströme - 181.000 Nm³/h - wird dem Reduktionsgaserhitzer 19 zugeführt

Das heißbrikettierte Eisen weist einen Metallisierungsgrad von 92 % auf.

### Die Analysen der Gase lauten:

| | reformiertes Gas | Gas zur Druckwechseladsorptionsanlage | Tailgas | Reduktionsgas |
|---|---|---|---|---|
| CO[Vol.%] | 7,7 | 7,2 | 7,5 | 6,5 |
| CO₂ [Vol.%] | 6,0 | 13,2 | 61,3 | 4,4 |
| H₂[Vol.%] | 47,0 | 74,4 | 23,1 | 70,4 |
| H₂O [Vol.%] | 36,1 | 0,5 | 2,5 | 1,3 |
| N₂ [Vol.%] | 0,9 | 1,3 | 1,2 | 4,2 |
| CH₄ [Vol.%] | 2,3 | 3,4 | 4,4 | 13,2 |

Das Eisenerz weist die gleiche Zusammensetzung wie in Beispiel A auf.

Vorteile bei dieser Gasaufteilung:
- Verkleinerung der Druckwechseladsorptionsanlagenkapazität (verglichen mit Beispiel A und B 30 bis 40 %)
- Kein H₂S-Gehalt im Tailgas (dieses wird bei Beispiel A und B mit dem Eisenerz in den Topgaskreislauf eingebracht und teilweise bei der Druckwechseladsorptionsanlage ausgeschleust) - dadurch entsteht bei einer nachfolgenden thermischen Verwendung des Tailgases kein umweltbeeinträchtigendes SO₂ bzw. kann eine Entschwefelungsanlage entfallen.

## Patentansprüche

1. Verfahren zur Direktreduktion von teilchenförmigem eisenhältigem Material in einem mehrstufigen Wirbelschichtverfahren, wobei reformiertes Gas, zumindest zum Teil vom CO₂ befreit, als H₂- und CO-hältiges Reduktionsgas einer Wirbelschicht-Reduktionszone zugeführt und von dieser als Topgas abgezogen wird und wobei das Topgas zumindest teilweise gemeinsam mit reformiertem Gas für die Direktreduktion eingesetzt wird, dadurch gekennzeichnet, daß das reformierte Gas vor der CO₂-Eliminierung durch Mischen mit Topgas stark abgekühlt wird und aus 50 bis 100 % des reformierten Gases und bis 100 % des Topgases zusätzlich zum CO₂ zumindest teilweise CH₄ und N₂ durch eine Druckwechseladsorption, entfernt werden, daß das Reduktionsgas erhitzt wird und daß das aus dem reformierten Gas bzw. dem Topgas durch Adsorption entfernte Tailgas als Heizgas eingesetzt wird.

2. Verfahren nach Anspruch 1, dadurch gekennzeichnet, daß das aus dem reformierten Gas bzw. Topgas durch Druckwechseladsorption entfernte Tailgas zum Erhitzen des Reduktionsgases und/oder als Heizgas für den Reformprozeß zur Herstellung des reformierten Gases eingesetzt wird.

3. Verfahren nach Anspruch 1 oder 2, dadurch gekennzeichnet, daß das reformierte Gas vor der CO₂-Eliminierung auf eine Temperatur zwischen 20 und 100°C, insbesondere zwischen 30 und 50°C, abgekühlt wird.

4. Verfahren nach einem oder mehreren der Ansprüche 1 bis 3, dadurch gekennzeichnet, daß die Direktreduktion des teilchenförmigen eisenhältigen Materials in mehreren in Serie hintereinander geschalteten Wirbelschichtreduktionszonen durchgeführt wird, wobei das feinteilchenförmige eisenhältige Material von Wirbelschichtzone zu Wirbelschichtzone durch Schwerkraft von oben nach unten und das Reduktionsgas von Wirbelschichtzone zu Wirbelschichtzone in entgegengesetzter Richtung geführt ist, wobei das bei der Direktreduktion verbrauchte Reduktionsgas als Topgas aus der obersten Wirbelschichtreduktionszone abgezogen, mit reformiertem Gas vermischt und als Reduktionsgas eingesetzt wird.

5. Verfahren nach einem oder mehreren der Ansprüche 1 bis 4, dadurch gekennzeichnet, daß das Erhitzen des Reduktionsgases zweistufig erfolgt, u.zw. in einer ersten Stufe (19) durch Wärmetausch und in einer zweiten Stufe (31) durch Teilverbrennung mit Hilfe von in zumindest eine Teilmenge des Reduktionsgases eingeleitetem Sauerstoff (Fig. 2).

6. Anlage zur Durchführung des Verfahrens nach einem oder mehreren der Ansprüche 1 bis 5, mit einer Mehrzahl von Wirbelschichtreaktoren (1 bis 4) zur Aufnahme des eisenoxidhältigen Materials, einer Reduktionsgas-Zuleitung (18) zum in Materialflußrichtung letztangeordneten Wirbelschichtreaktor (4) und einer das sich bei der Reduktion bildende Topgas vom in Materialflußrichtung erstangeordneten Wirbelschichtreaktor (1) abführenden Topgas-Ableitung (8), mit einem Reformer (10), einer vom Reformer (10) ausgehenden Reformgas-Leitung (13), die mit der Topgas-Leitung (8) zusammenmündet, wobei das aus reformiertem Gas und Topgas gebildete Reduktionsgas über die Reduktionsgas-Zuleitung (18) in den letztangeordneten Wirbelschichtreaktor (4) gelangt, und mit einer CO₂-Eliminierungsanlage (16), dadurch gekennzeichnet, daß die CO₂-Eliminierungsanlage als Druckwechseladsorptionsanlage ausgebildet und von einer Mischung aus Topgas und durch die Mischung stark abgekuhlten reformierten Gas beaufschlagt ist, und daß eine von der Adsorptionsanlage (16) das von CO₂ befreite Gas zu einer Heizeinrichtung (19) führende Leitung und eine von der Adsorptionsanlage (16) abgeschiedenes Tailgas ableitende Tailgas-Ableitung (16") zu einer Heizeinrichtung führt.

7. Anlage nach Anspruch 6, dadurch gekennzeichnet, daß die Adsorptionsanlage (16) von einer Topgas-Zweigleitung (22) sowie gegebenenfalls von einer reformiertes Gas leitenden Zweigleitung (21), die von der Reformgas-Leitung (13) ausgeht, überbrückt ist.

8. Anlage nach Anspruch 6 oder 7, dadurch gekennzeichnet, daß die Tailgas-Ableitung (16") mit der Heizeinrichtung des Reformers (10) leitungsmäßig verbunden ist.

9. Anlage nach einem oder mehreren der Ansprüche 6 bis 8, dadurch gekennzeichnet, daß die Tailgas-Ableitung (16") mit einer Heizeinrichtung (19) für das Reduktionsgas leitungsmäßig verbunden ist.

10. Anlage nach einem oder mehreren der Ansprüche 6 bis 9, dadurch gekennzeichnet, daß in der Gas-Zuleitung zur Adsorptionsanlage ein Gaskühler (17) vorgesehen ist.

11. Anlage nach einem oder mehreren der Ansprüche 6 bis 10, dadurch gekennzeichnet, daß eine Mehrzahl von Wirbelschichtreaktoren (1 bis 4) hintereinander in Serie geschaltet ist, wobei das eisenoxidhältige Material von Wirbelschichtreaktor (1) zu Wirbelschichtreaktor (2, 3, 4) über Förderleitungen (6) in einer Richtung und das Reduktionsgas von Wirbelschichtreaktor (4) zu Wirbelschichtreaktor (3, 2, 1) über Verbindungsleitungen (20) in die entgegengesetzte Richtung geführt ist, und wobei innerhalb jedes Wirbelschichtreaktors (1 bis 4) Zyklone zur Abscheidung von mit dem Reduktionsgas mitgerissenen Feinteilchen vorgesehen ist.

12. Anlage nach einem oder mehreren der Ansprüche 6 bis 11, dadurch gekennzeichnet, daß als Heizeinrichtung für das Reduktionsgas ein Wärmetauscher (19) und in Serie dazu eine Teilverbrennungseinrichtung (31) für das Reduktionsgas mit einer Sauerstoffzuführung (32) vorgesehen sind (Fig. 2).

## Claims

1. A process for the direct reduction of particulate iron-containing material in a multistage fluidized-bed process, wherein reformed gas, at least partially freed from the CO₂, is supplied to a fluidized-bed reduction zone as a reducing gas containing H₂ and CO and is carried off from the same as a top gas and wherein at least a portion of the top gas together with reformed gas is utilized for the direct reduction, characterized in that prior to CO₂ elimination the reformed gas is cooled down considerably by mixing with top gas and CH₄ and N₂ are, in addition to the CO₂, at least partially removed by pressure-swing adsorption from 50 to 100 % of the reformed gas and up to 100 % of the top gas, that the reducing gas is heated and that the tail gas removed from the reformed gas and/or the top gas by adsorption is utilized as a heating gas.

2. A process according to claim 1, characterized in that the tail gas removed from the reformed gas and/or the top gas by pressure-swing adsorption is utilized for heating the reducing gas and/or as a heating gas for the reforming process carried out to produce the reformed gas.

3. A process according to claim 1 or 2, characterized in that prior to CO₂ elimination the reformed gas is cooled down to a temperature ranging between 20 and 100°C, particularly between 30 and 50°C.

4. A process according to one or several of claims 1 to 3, characterized in that the direct reduction of the particulate iron-containing material is carried out in several fluidized-bed reduction zones subsequently connected in series, wherein the fine-particulate iron-containing material is conducted from fluidized-bed zone to fluidized-bed zone by gravity from the top to the bottom and the reducing gas is conducted from fluidized-bed zone to fluidized-bed zone in the opposite direction, the reducing gas spent during direct reduction being carried off the uppermost fluidized-bed reduction zone as a top gas, mixed with reformed gas and utilized as a reducing gas.

5. A process according to one or several of claims 1 to 4, characterized in that heating of the reducing gas is effected in two stages, namely in a first stage (19) by heat exchange and in a second stage (31) through partial combustion by aid of oxygen that has been introduced into at least a portion of the reducing gas (Fig. 2).

6. A plant for carrying out the process according to one or several of claims 1 to 5, comprising a plurality of fluidized-bed reactors (1 to 4) for receiving the iron-oxide-containing material, a reducing-gas feed duct (18) leading to the fluidized-bed reactor (4) arranged last in the direction of flow of the material and a top-gas discharge duct (8) carrying off the top gas forming during reduction from the fluidized-bed reactor (1) arranged first in the direction of flow of the material, a reformer (10), a reformed-gas duct (13) departing from the reformer (10) and merging with the top-gas duct (8), the reducing gas formed from reformed gas and top gas passing into the fluidized-bed reactor (4) arranged last via the reducing-gas feed duct (18), and comprising a CO₂ elimination plant (16), characterized in that the CO₂ elimination plant is constructed as a pressure-swing adsorption plant and is supplied with a mixture of top gas and reformed gas considerably cooled down by the mixture and that a duct conducting the gas that has been freed from CO₂ from the adsorption plant (16) to a heating means (19) and a tail-gas discharge duct (16") discharging tail gas that has been separated by the adsorption plant (16) lead to a heating means.

7. A plant according to claim 6, characterized in that the adsorption plant (16) is bypassed by means of a top-gas branch duct (22) as well as, optionally, by a branch duct (21) conducting reformed gas, which departs from the reformed-gas duct (13).

8. A plant according to claim 6 or 7, characterized in that the tail-gas discharge duct (16") is flow-connected with the heating means of the reformer (10).

9. A plant according to one or several of claims 6 to 8, characterized in that the tail-gas discharge duct (16") is flow-connected with a heating means (19) for the reducing gas.

10. A plant according to one or several of claims 6 to 9, characterized in that in the gas supply duct leading to the adsorption plant a gas cooler (17) is provided.

11. A plant according to one or several of claims 6 to 10, characterized in that a plurality of fluidized-bed reactors (1 to 4) is subsequently connected in series, the iron-oxide-containing material being conducted from fluidized-bed reactor (1) to fluidized-bed reactor (2, 3, 4) via conveying ducts (6) in one direction and the reducing gas being conducted from fluidized-bed reactor (4) to fluidized-bed reactor (3, 2, 1) via connection ducts (20) in the opposite direction, wherein within each of the fluidized-bed reactors (1 to 4) cyclones are provided for separating fine particles that have been entrained with the reducing gas.

12. A plant according to one or several of claims 6 to 11, characterized in that there are provided a heat exchanger (19) as a heating means for the reducing gas and, in serial arrangement thereto, a partial-combustion means (31) for the reducing gas with an oxygen supply duct (32) (Fig. 2).

## Revendications

1. Procédé pour la réduction directe d'un matériau particulaire contenant du fer dans un procédé à lit fluidisé en plusieurs étapes, du gaz de reformage libéré au moins partiellement de CO₂ étant introduit comme gaz de réduction contenant H₂ et CO dans une zone de réduction à lit fluidisé et étant soutiré de celle-ci comme gaz de tête et le gaz de tête étant utilisé au moins en partie avec du gaz de reformage pour la réduction directe, caractérisé en ce que le gaz de reformage est fortement refroidi avant l'élimination de CO₂ par mélange avec du gaz de tête et de 50 à 100% du gaz de reformage et jusqu'à 100% du gaz de tête étant purifiés au moins partiellement de CH₄ et de N₂ en plus de CO₂ par une adsorption modulée en pression, en ce que le gaz de réduction est chauffé et en ce que le gaz de queue purifié par adsorption du gaz de reformage respectivement du gaz de tête est utilisé comme gaz de chauffage.

2. Procédé selon la revendication 1, caractérisé en ce que le gaz de queue purifié par adsorption modulée en pression du gaz de reformage respectivement du gaz de tête est utilisé pour chauffer le gaz de réduction et/ou comme gaz de chauffage pour le procédé de reformage destiné à la préparation du gaz de reformage.

3. Procédé selon la revendication 1 ou 2, caractérisé en ce que le gaz de reformage est refroidi avant l'élimination de CO₂ à une température comprise entre 20 et 100°C, en particulier comprise entre 30 et 50°C.

4. Procédé selon l'une ou plusieurs quelconques des revendications 1 à 3, caractérisé en ce que la réduction directe du matériau particulaire contenant du fer est réalisée dans plusieurs zones de réduction à lit fluidisé raccordées les unes après les autres en série, le matériau particulaire contenant du fer étant introduit de zone à lit fluidisé à zone à lit fluidisé par gravité du haut vers le bas et le gaz de réduction étant introduit de zone à lit fluidisé à zone à lit fluidisé à contre-courant, le gaz de réduction utilisé pour la réduction directe étant soutiré comme gaz de tête à partir de la zone de réduction à lit fluidisé la plus haute avec du gaz de reformage mélangé et étant utilisé comme gaz de réduction.

5. Procédé selon l'une ou plusieurs quelconques des revendications 1 à 4, caractérisé en ce que le chauffage du gaz de réduction est réalisé en deux étapes, c'est-à-dire dans une première étape (19) par échange de chaleur et dans une seconde étape (31) par combustion partielle à l'aide d'oxygène introduit dans au moins une quantité partielle du gaz de réduction (fig. 2).

6. Installation pour la réalisation du procédé selon l'une ou plusieurs quelconques des revendications 1 à 5 avec plusieurs réacteurs à lit fluidisé (1 à 4) pour recevoir le matériau contenant de l'oxyde de fer, une canalisation d'entrée de gaz de réduction (18) dans le réacteur à lit fluidisé disposé en dernier dans la direction de l'écoulement du matériau (4) et une canalisation de sortie de gaz de tête (8) évacuant le gaz de tête formé lors de la réduction à partir du réacteur à lit fluidisé disposé en premier dans la direction de l'écoulement du matériau (1), avec un dispositif de reformage (10), une canalisation de gaz de reformage (13) sortant du dispositif de reformage (10), qui débouche dans la canalisation de gaz de tête (8), le gaz de réduction constitué de gaz de reformage et de gaz de tête parvenant dans le réacteur à lit fluidisé disposé en dernier (4) par l'intermédiaire de la canalisation d'entrée de gaz de réduction (18), et avec une installation d'élimination de CO₂ (16), caractérisée en ce que l'installation d'élimination de CO₂ est formée comme une installation d'adsorption modulée en pression et est comprimée avec un mélange constitué de gaz de tête et de gaz de reformage fortement refroidi par le mélange, et en ce qu'une canalisation acheminant le gaz libéré de CO₂ de l'installation d'adsorption (16) vers un dispositif de chauffage (19) et une canalisation de sortie de gaz de queue (16") évacuant du gaz de queue séparé dans l'installation d'adsorption (16) mènent à un dispositif de chauffage.

7. Installation selon la revendication 6, caractérisée en ce que l'installation d'adsorption (16) est déviée par une canalisation de dérivation de gaz de tête (22) ainsi qu'éventuellement par une canalisation de dérivation conduisant du gaz de reformage (21) laquelle sort de la canalisation de gaz de reformage (13).

8. Installation selon la revendication 6 ou 7, caractérisée en ce que la canalisation de sortie de gaz de queue (16") est raccordée par une canalisation au dispositif de chauffage du dispositif de reformage (10).

9. Installation selon l'une ou plusieurs quelconques des revendications 6 à 8, caractérisée en ce que la canalisation de sortie de gaz de queue (16") est raccordée par une canalisation au dispositif de chauffage (19) pour le gaz de réduction.

10. Installation selon l'une ou plusieurs quelconques des revendications 6 à 9, caractérisée en ce qu'il est prévu dans la canalisation d'entrée de gaz de l'installation d'adsorption un refroidisseur de gaz (17).

11. Installation selon l'une ou plusieurs quelconques des revendications 6 à 10, caractérisée en ce que plusieurs réacteurs à lit fluidisé (1 à 4) sont raccordés l'un après l'autre en série, le matériau contenant de l'oxyde de fer étant introduit de réacteur à lit fluidisé (20) à réacteur à lit fluidisé (2,3,4) par l'intermédiaire de canalisations de transport (6) dans une direction et le gaz de réduction est introduit de réacteur à lit fluidisé (4) à réacteur à lit fluidisé (3,2,1) par l'intermédiaire de canalisations de liaison (20) à contre-courant, et un cyclone étant prévu à l'intérieur de chaque réacteur à lit fluidisé (1 à 4) pour la séparation de fines particules entraînées par le gaz de réduction.

12. Installation selon l'une ou plusieurs quelconques des revendications 6 à 11, caractérisée en ce que sont prévus pour le dispositif de chauffage du gaz de réduction un échangeur de chaleur (19) et en série avec celui-ci un dispositif de combustion partielle (31) pour le gaz de réduction avec une alimentation en oxygène (32) (fig. 2).
